(19) Europäisches Patentamt
European Patent Office
Office européen des brevets

(11) EP 3 877 555 B1

(12) EUROPÄISCHE PATENTSCHRIFT

(45) Veröffentlichungstag und Bekanntmachung des Hinweises auf die Patenterteilung:
13.07.2022 Patentblatt 2022/28

(21) Anmeldenummer: 20728055.3

(22) Anmeldetag: 28.05.2020

(51) Internationale Patentklassifikation (IPC):
C21D 1/673 (2006.01)     C21D 1/76 (2006.01)
C21D 8/02 (2006.01)      C21D 9/56 (2006.01)
C22C 38/02 (2006.01)     C22C 38/04 (2006.01)
C22C 38/12 (2006.01)     C22C 38/14 (2006.01)
C23C 2/12 (2006.01)      C23C 2/28 (2006.01)
C23C 2/40 (2006.01)

(52) Gemeinsame Patentklassifikation (CPC):
C21D 9/561; B32B 15/012; C21D 1/673;
C21D 1/76; C21D 8/0278; C21D 8/0284;
C21D 9/562; C22C 21/02; C22C 21/04;
C22C 38/002; C22C 38/02; C22C 38/04;
C22C 38/06; C22C 38/12; C22C 38/14;     (Forts.)

(86) Internationale Anmeldenummer:
PCT/EP2020/064836

(87) Internationale Veröffentlichungsnummer:
WO 2020/245027 (10.12.2020 Gazette 2020/50)

(54) **VERFAHREN ZUM HERSTELLEN EINES BLECHBAUTEILS AUS EINEM MIT EINER KORROSIONSSCHUTZBESCHICHTUNG VERSEHENEN STAHLFLACHPRODUKT**

METHOD FOR PRODUCING A SHEET-METAL COMPONENT FROM A STEEL-PLATE PRODUCT WHICH IS PROVIDED WITH AN ANTI-CORROSION COATING

PROCÉDÉ DE PRODUCTION D'UNE PIÈCE EN TÔLE À PARTIR D'UN PRODUIT PLAT EN ACIER POURVU D'UN REVÊTEMENT DE PROTECTION CONTRE LA CORROSION

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 03.06.2019 PCT/EP2019/064332

(43) Veröffentlichungstag der Anmeldung:
15.09.2021 Patentblatt 2021/37

(73) Patentinhaber: ThyssenKrupp Steel Europe AG
47166 Duisburg (DE)

(72) Erfinder:
• KÖYER, Maria
44141 Dortmund (DE)
• RUTHENBERG, Manuela
44143 Dortmund (DE)
• BANIK, Janko
58762 Altena (DE)
• ETZOLD, Ulrich
47647 Kerken (DE)

(74) Vertreter: Cohausz & Florack
Patent- & Rechtsanwälte
Partnerschaftsgesellschaft mbB
Bleichstraße 14
40211 Düsseldorf (DE)

(56) Entgegenhaltungen:
EP-A1- 2 993 248        WO-A1-2014/166630
CN-A- 108 425 069       DE-A1-102017 210 201
DE-B3-102014 109 943    JP-A- 2005 272 967
US-A1- 2013 206 284

(52) Gemeinsame Patentklassifikation (CPC): (Forts.)
**C23C 2/12; C23C 2/28; C23C 2/40; C23C 28/00;
C23C 28/02; C23C 28/028**

**Beschreibung**

Die Erfindung betrifft ein Verfahren zum Herstellen eines Blechbauteils aus einem Stahlflachprodukt, das mit einer Korrosionsschutzbeschichtung versehen ist.

Als "Stahlflachprodukte" werden hier Walzprodukte verstanden, deren Länge und Breite jeweils wesentlich größer sind als ihre Dicke. Hierzu zählen insbesondere Stahlbänder und Stahlbleche.

Im vorliegenden Text sind, soweit nicht explizit etwas anderes vermerkt ist, Angaben zu den Gehalten von Legierungsbestandteilen stets in Gew.-% gemacht.

Die Anteile von bestimmten Bestandteilen an einer Atmosphäre, insbesondere einer Glühatmosphäre, sind dagegen in Vol.-% angegeben, soweit nichts anderes vermerkt ist.

Ein Verfahren der eingangs angegebenen Art ist aus der EP 2 993 248 A1 bekannt. Als Ausgangsprodukt für dieses Verfahren wird ein Stahlflachprodukt eingesetzt, dessen Stahlsubstrat aus so genanntem "MnB-Stahl" besteht. Stähle dieser Art sind in der EN 10083-3 genormt und besitzen eine gute Härtbarkeit. Dabei erlauben sie beim Warmpressen eine sichere Prozessführung, durch die es auf wirtschaftliche Weise möglich ist, im Zuge der Warmverformung eine Martensithärtung noch im Werkzeug ohne zusätzliche Kühlung zu bewirken. Ein typisches Beispiel für einen solchen Stahl ist der unter der Bezeichnung 22MnB5 bekannte Stahl, der im Stahlschlüssel 2004 unter der Werkstoffnummer 1.5528 zu finden ist. Typischerweise enthält auf dem Markt erhältlicher, vollberuhigter 22MnB5-Stahl neben Eisen und unvermeidbaren Verunreinigungen (in Gew.-%) 0,10 - 0,250 % C, 1,0 - 1,4 % Mn, 0,35 - 0,4 % Si, bis zu 0,03 % P, bis zu 0,01 % S, bis zu 0,040 % Al, bis zu 0,15 % Ti, bis zu 0,1 % Nb, in Summe bis zu 0,5 % Cr + Mo, sowie bis zu 0,005 % B. Um die aus derart zusammengesetztem Stahl bestehenden Stahlflachprodukte gegen korrosive Angriffe zu schützen, und gleichzeitig die Gefahr einer Wasserstoffaufnahme bei der für ein Warmumformen erforderlichen Erwärmung zu minimieren, werden die Stahlflachprodukte gemäß dem bekannten Verfahren mit einem Korrosionsschutzüberzug auf Al-Basis versehen, der als zusätzlichen Legierungsbestandteil wirksame Gehalte von 0,005 - 0,7 Gew.-% an mindestens einem Erdalkali- oder Übergangsmetall enthält. Darüber hinaus können in dem Überzug auch Si-Gehalte von 3-15 Gew.-% und Fe-Gehalte von bis zu 5 Gew.-% vorhanden sein. Als das mindestens eine Erdalkali- oder Übergangsmetall des Schutzüberzugs wird dabei bevorzugt Mg in Gehalten von 0,1 - 0,5 Gew.-% eingesetzt, wobei ersatzweise oder ergänzend auch Kalzium, Strontium, Natrium oder Barium in Frage kommen. Der Al-basierte Schutzüberzug lässt sich durch Schmelztauchbeschichten, in der Fachsprache auch "Feueraluminieren" genannt, oder durch ein Gasabscheideverfahren, z.B. den bekannten PVD-(Physical Vapour Deposition) oder CVD-Verfahren (Chemical Vapour Deposition), auf das Stahlsubstrat aufbringen.

Besondere Anforderungen an die Art und Weise, in der der Korrosionsschutzüberzug auf das aus einem MnB-Stahl bestehende Stahlsubstrat aufgebracht wird, sind im voranstehend erläuterten Stand der Technik nicht erwähnt. Dabei kommt es bei einer in konventioneller Weise unter einer Normalatmosphäre über eine Dauer von 360 - 800 s auf eine Temperatur von 900 °C durchgeführten Erwärmung einer aus dem in der voranstehend erläuterten Weise beschichteten Platine aufgrund der Anwesenheit des Erdalkali- oder Übergangsmetalls im Überzug allenfalls zu einer minimalen Wasserstoffaufnahme im Stahlsubstrat, so dass die Gefahr einer so genannten "Wasserstoffversprödung" minimiert ist.

Im praktischen Gebrauch zeigt sich jedoch, dass trotz dieses Erfolgs Bauteile, die aus den in der voranstehend beschriebenen Weise erzeugten Stahlflachprodukten geformt werden, zwar optimierte Festigkeiten aufweisen, aber den immer höheren Anforderungen nicht immer genügen können, die an das Verhalten von aus derartigen Stahlflachprodukten hergestellten Blechbauteilen beim Widerstandsschweißen und an die Anhaftung von organischen Schichten, wie einer Lackierung und desgleichen, an solchen Blechbauteilen gestellt werden.

Die DE 10 2017 210 201 A1 beschäftigt sich ebenfalls mit einem Verfahren zur Herstellung eines mit einem metallischen, vor Korrosion schützenden Überzug versehenen Stahlbauteils auf Al-Basis. Dazu wird ein Stahlflachprodukt bereitgestellt, das aus, in Gew.-%, 0,15 bis 0,50 % C, 0,50 bis 3,0 % Mn, 0,10 bis 0,50 % Si, 0,01 bis 1,00 % Cr, bis zu 0,20 % Ti, bis zu 0,10 % Al, bis zu 0,10 % P, bis zu 0,1 % Nb, bis zu 0,01 % N, bis zu 0,05 % S und bis zu 0,1 % B, Rest Fe und unvermeidbaren Verunreinigungen besteht und mit einer Al-Beschichtung beschichtet ist, die aus, in Gew.-%, 3 bis 15 % Si, 1 bis 3,5 % Fe, bis zu 0,5 % Alkali- und/oder Erdalkalimetalle, Rest Al und unvermeidbaren Verunreinigungen besteht. Das bereitgestellte Blech wird in einem Ofen bei einer Temperatur und über eine Dauer geglüht, die über einen nach einer komplexen Formel berechneten Parameter miteinander verknüpft sind. In Abhängigkeit von der Ofenverweildauer und der Temperatur soll sich dabei am Übergang zwischen Substrat und Beschichtung eine so genannte Interdiffusionszone ausbilden, in der sich beim Presshärten kein martensitisches Gefüge einstellt, welche aber auch nicht der Al-Beschichtung zuzuordnen ist. Diese Interdiffusionszone erstreckt sich ausgehend von der Mitte des Stahlflachproduktes von der Dicke, ab der im Bauteil kein martensitisches Gefüge mehr vorliegt, bis zu der Dicke, ab dem der Eisengehalt der Al-Beschichtung fortlaufend ≤ 85 Gew.-% und der Al-Gehalt fortlaufend ≥ 10 Gew.-% ist. Hinweise, wie die Interdiffusionszone im Einzelnen ausgebildet sein könnte, oder Anleitungen dazu, wie die Entstehung und Zusammensetzung der Interdiffusionszone gezielt mit Blick auf bestimmte Oberflächeneigenschaften der Beschichtung gesteuert werden könnte, werden auch in diesem Stand der Technik nicht gegeben. Vielmehr stehen dort Überlegungen zur Verbesserung des Verformungsverhaltens der Al-Beschichtung, insbesondere des erzielbaren Biegewinkels, im Vordergrund.

Des Weiteren ist aus der DE 10 2014 109 943 B3 ein Stahlprodukt bekannt, das mit einer Aluminiumlegierung schmelztauchbeschichtet ist, die aus, in Gew.-%, 0,2 - 2 % Mn und/oder 0,2 - 7 % Mg sowie als Pflichtelemente 0,5 - 5 % Fe und mindestens eines der Elemente Ti in Gehalten 0,05 - 0,4 % oder Zr in Gehalten von 0,05 - 0,4 %, wobei Ti und Zr auch gleichzeitig anwesend sein können, und als Rest aus Aluminium und unvermeidbaren Verunreinigungen besteht.

Schließlich ist in der US 2013/0206284 A1 ein Verfahren zur Herstellung eines Stahlbauteils mit einer metallischen Korrosionsschutzbeschichtung aus einem Stahlblechprodukt beschrieben, das mindestens 0,4 Gew.-% Mn enthält. Für eine Schmelztauchbeschichtung wird das Stahlblechprodukt dabei in einem Durchlaufofen unter einer Glühatmosphäre, die bis zu 25 Vol.-% $H_2$, 0,1 bis 10 Vol.-% $NH_3$, $H_2O$, $N_2$ und als Rest prozessbedingte Verunreinigungen enthält, bei einem Taupunkt, der zwischen -50 °C und -5 °C liegt, bei einer Temperatur von 400 - 1100 °C über eine Dauer von 5 bis 600 s geglüht. Das geglühte Stahlblechprodukt weist eine 5 bis 200 $\mu$m dicke Nitrierschicht auf, deren Korngröße feiner ist als die Korngröße der inneren Kernschicht. Durch das Schmelztauchbeschichten wird auf das so geglühte Stahlsubstrat ein an sich bekanntes Schichtsystem aufgebracht, das auf Zn, Al, Zn-Al, Zn-Mg, Zn-Ni, Zn-Fe, Al-Mg, Al-Si, Zn-Al-Mg oder Zn-Al-Mg-Si basiert. Nach der Schmelztauchbeschichtung können weitere Wärmebehandlungsschritte durchgeführt werden, um die metallische Schutzschicht zu gestalten. Erforderlichenfalls kann nach der Schmelztauchbeschichtung auch eine Diffusionsglühung, z. B. eine Galvannealing-Behandlung, kontinuierlich durchgeführt werden. Nachdem das Stahlprodukt mit der metallischen Schutzschicht versehen ist, wird von dem Stahlblech eine Platine abgetrennt. Diese wird auf eine Austenitisierungstemperatur von 780 - 950° C erwärmt, warm umgeformt und dann abgekühlt, so dass sich ein gehärtetes Gefüge bildet.

Vor diesem Hintergrund hat sich die Aufgabe ergeben, ein Verfahren anzugeben, dass es ermöglicht, aus einem Stahlflachprodukt der voranstehend erläuterten Art Blechbauteile zu formen, die höchste Anforderungen an ihre Verschweißbarkeit erfüllen und dabei optimale Voraussetzungen für eine Beschichtung mit einem organischen Überzug, insbesondere für eine Lackierung, aufweisen.

Zur Lösung dieser Aufgabe schlägt die Erfindung vor, dass bei der Herstellung von Blechbauteilen mindestens die in Anspruch 1 angegebenen Verfahrensschritte absolviert werden.

Es versteht sich dabei von selbst, dass bei der Durchführung des erfindungsgemäßen Verfahrens der Fachmann nicht nur die in den Ansprüchen erwähnten und hier erläuterten Verfahrensschritte absolviert, sondern auch alle sonstigen Schritte und Tätigkeiten ausführt, die bei der praktischen Umsetzung derartiger Verfahren im Stand der Technik regelmäßig durchgeführt werden, wenn sich hierzu die Notwendigkeit ergibt.

Vorteilhafte Ausgestaltungen der Erfindung sind in den abhängigen Ansprüchen angegeben und werden wie der allgemeine Erfindungsgedanke nachfolgend im Einzelnen erläutert.

Bei einem erfindungsgemäßen Verfahren zum Herstellen eines Blechbauteils aus einem Stahlflachprodukt, das mit einer Korrosionsschutzbeschichtung versehen ist, werden folglich mindestens folgende Arbeitsschritte durchlaufen:

a) Bereitstellen eines Stahlflachprodukts, das aus einem Stahl erzeugt ist, der (in Gew.-%) aus 0,05 - 0,5 % C, 0,5 - 3 % Mn, 0,06 - 1,7 % Si, bis zu 0,06 % P, bis zu 0,01 % S, bis zu 1,0 % Al, bis zu 0,15 % Ti, bis zu 0,6 % Nb, bis zu 0,01 % B, bis zu 1,0 % Cr, bis zu 1,0 % Mo, wobei die Summe der Gehalte an Cr und Mo höchstens 1,0 % beträgt, bis zu 0,2 % Ca, bis zu 0,1 % V, und als Rest aus Eisen und unvermeidbaren Verunreinigungen besteht;;

b) Glühen des Stahlflachprodukts in einem Durchlaufofen, der vier Zonen A, B, C D aufweist, die aufeinander folgend von dem Stahlflachprodukt durchlaufen werden und in denen das Stahlflachprodukt unter einer jeweils aus 0,1 - 15 Vol.-% Wasserstoff und als Rest aus Stickstoff sowie technisch unvermeidbaren Verunreinigungen bestehenden Glühatmosphäre mit einer Taupunkttemperatur $TP_A$, $TP_B$, $TP_C$, $TP_D$ bei einer Glühtemperatur $GT_A$, $GT_B$, $GT_C$, $GT_D$ geglüht wird, die folgender Maßgabe genügen:

| Zone | Taupunkttemperatur TP | Glühtemperatur GT |
|---|---|---|
| A | -10 °C $\leq$ $TP_A$ $\leq$ -25 °C | 800 °C $\leq$ $GT_A$ $\leq$ 950 °C |
| B | -27 °C $\leq$ $TP_B$ $\leq$ -41 °C | 800 °C $\leq$ $GT_B$ $\leq$ 930 °C |
| C | -30 °C $\leq$ $TP_C$ $\leq$ -80 °C | 800 °C $\leq$ $GT_C$ $\leq$ 950 °C |
| D | -30 °C $\leq$ $TP_D$ $\leq$ -20 °C | 750 °C $\leq$ $GT_D$ $\leq$ 950 °C |

wobei der Lambda-Wert $\lambda$ der in den Zonen A - D aufrechterhaltenen Glühatmosphäre 0,95 - 1,1 beträgt.

c) Applikation einer Korrosionsschutzbeschichtung auf das im Arbeitsschritt b) erhaltene Stahlflachprodukt, wobei die Korrosionsschutzbeschichtung aus (in Gew.-%) bis 15 % Si, bis zu 5 % Fe, 0,1 - 5 % Mg und als Rest aus Al besteht;

d) optional: Dressierwalzen des mit der Korrosionsschutzbeschichtung versehenen Stahlflachprodukts;

e) optional: Abteilen einer Platine von dem Stahlflachprodukt;

f) Erwärmen des Stahlflachprodukts oder der Platine auf eine Warmformtemperatur, die höher ist als die Ac3-Temperatur des Stahls des Stahlflachprodukts und 1000 °C nicht überschreitet, über eine Haltedauer, die ausreicht, um in das Stahlflachprodukt oder die Platine eine Wärmeenergiemenge Js von mehr als 100.000 kJs und höchstens 800.000 kJs einzubringen, wobei Js gemäß folgender Gleichung berechnet wird:

$$Js \, [kJs] = [(T2-T1) \times c \times t \times m]/1000;$$

mit

T2:     Endtemperatur des Bauteils am Ende der Erwärmung in K
T1:     Starttemperatur des Bauteils zu Beginn der Erwärmung in K
c:     Wärmekapazität Stahl (typischerweise 460 J/kgK)
t:     Haltezeit des Stahlflachprodukts oder der Platine auf der Endtemperatur in s
m:     Masse des Stahlflachprodukts oder der Platine in kg

g) Warmformen des auf die Warmformtemperatur erwärmten Stahlflachprodukts oder der auf die Warmformtemperatur erwärmten Platine zu dem Blechbauteil;

h) Abkühlen mindestens eines Abschnitts des Bauteils mit einer Abkühlgeschwindigkeit, die ausreicht, um in dem Abschnitt des Blechbauteils Härtegefüge zu erzeugen.

Die Erfindung geht von der Erkenntnis aus, dass es für das Verhalten von Blechbauteilen, die mit einer aluminiumbasierten ("Al-basierten") Korrosionsschutzbeschichtung versehen sind, beim Widerstandsschweißen und für die Haftung einer organischen Beschichtung, insbesondere einer Lackierung, auf solchen Blechbauteilen nicht alleine auf die Zusammensetzung der Grenzschicht zwischen der Korrosionsschutzbeschichtung und der Umgebungsatmosphäre ankommt, sondern dass hier insbesondere auch Parameter, wie die Rauheit und die Leitfähigkeit des Gesamtüberzuges, eine entscheidende Rolle spielen. Dabei werden durch die erfindungsgemäße Art und Weise der Glühung (Arbeitsschritt b)) vor der Applikation der Korrosionsschutzbeschichtung (Arbeitsschritt c)) die Voraussetzungen dafür geschaffen, dass beim erfindungsgemäß fertig prozessierten Bauteil eine optimal homogene Korrosionsschutzbeschichtung vorliegt.

So weisen erfindungsgemäß erzeugte Bauteile typischerweise eine Korrosionsschutzbeschichtung auf, die durch mehrere Schichten unterschiedlicher Zusammensetzung gebildet sind. Durch die erfindungsgemäße Führung der Taupunkt- und der Glühtemperatur während der Glühung im Durchlaufglühofen zur Vorbereitung des anschließenden Auftrags der Korrosionsschutzbeschichtung wird eine deutliche Reduzierung der in der Beschichtung enthaltenen Poren erreicht.

Durch die erfindungsgemäß gewählten Glühparameter bei der Glühung (Arbeitsschritt b)) vor der Beschichtung wird erreicht, dass bei dem fertig geglühten Stahlflachprodukt an zu mindestens 70 % der Oberfläche reines Eisen ("Fe") vorliegt. Hierdurch kommt es zum einem zu einer guten Anbindung des anschließend aufgetragenen Al-basierten Überzuges, indem sich am Übergang vom Stahlsubstrat zur Korrosionsschutzbeschichtung eine Eisen-Aluminium-Schicht ("Fe-Al-Schicht") ausbildet. Zum anderen gelangt so ausreichend und in einer homogen gleichmäßigen Verteilung Eisen in die Schicht, durch das die Leitfähigkeit der Schicht verbessert und damit einhergehend das Verhalten beim Widerstandsschweißen optimiert wird.

Im Fall, dass es sich bei dem im Arbeitsschritt b) bereitgestellten Stahlflachprodukt bereits um einen Zuschnitt handelt, der zur Umformung zu dem Bauteil direkt geeignet ist, kann Arbeitsschritt e) entfallen. Handelt es sich dagegen bei dem bereitgestellten Stahlflachprodukt um ein Stahlband oder ein größeres Stahlblech, wird hiervon im Arbeitsschritt e) eine Platine passender Größe abgeteilt.

In der erfindungsgemäß aufgetragenen Korrosionsschutzbeschichtung eines erfindungsgemäß prozessierten Stahlflachprodukts ist alleine Mg als zur Gruppe der Erdalkali- oder Übergangsmetalle gehörenden Elementen in den erfindungsgemäß vorgesehenen Gehalten vorhanden.

Das in der erfindungsgemäßen Weise geglühte und beschichtete (Arbeitsschritte b), c) Stahlflachprodukt oder die davon abgeteilte (Arbeitsschritt e)) Platine werden für die Warmformgebung (Arbeitsschritt g)) auf die Warmformtemperatur erwärmt (Arbeitsschritt f)). Dabei kann das in der homogenen Grenzschicht der Korrosionsschutzbeschichtung schon vorhandene Eisen gleichmäßig in die Beschichtung eindiffundieren, ohne dass es dabei zu nennenswerten Fehlstellen kommt. Gleichzeitig diffundiert das erfindungsgemäß in der Korrosionsschutzbeschichtung vorgesehene Erdalkali- oder Übergangsmetall aufgrund seiner Sauerstoffaffinität an die Oberfläche und bildet dort eine Oxidschicht. Die Eisenatome können dabei aufgrund ihrer vergleichbaren Atomgröße im Verhältnis 1:1 mit den Erdalkali- oder Übergangsmetallatomen die Plätze tauschen und werden so in das Metallgitter eingebaut, so dass auch durch die Diffusion der Erdalkali- oder Übergangsmetallatome allenfalls eine vernachlässigbare Anzahl von Fehlstellen entsteht. In Folge der erfindungsgemäß erzielten Reduktion der Fehlstellen können diese Fehlstellen in der Korrosionsschutzbeschichtung eines erfindungsgemäßen Bauteils auch nicht zu Poren agglomerieren, so dass sich ein erfindungsgemäßes Bauteil durch eine gegenüber konventionell erzeugten, beispielsweise nach dem Muster der EP 2 086 755 B1 erzeugten Bauteilen, deutlich reduzierte Porenzahl auszeichnet.

Das erfindungsgemäße Verfahren eignet sich zur Herstellung von Bauteilen aus Stahlflachprodukten mit einem großen Dickenspektrum. So lassen sich mit dem erfindungsgemäßen Verfahren Stahlflachprodukte verarbeiten, deren Dicke 0,6 - 7 mm beträgt.

Die Erzeugung der im Arbeitsschritt a) bereitgestellten Stahlflachprodukte kann dabei in jeder beliebigen aus dem Stand der Technik bekannten Weise erfolgen. Dabei eignet sich das erfindungsgemäße Verfahren insbesondere zur Verarbeitung von Stahlflachprodukten mit einer Dicke von 0,8 - 4 mm, insbesondere 0,8 - 3 mm. Stahlflachprodukte mit größeren Dicken von mehr als 3 mm werden dabei typischerweise im warmgewalzten Zustand verarbeitet, während dünnere Bleche typischerweise im kaltgewalzten Zustand bereitgestellt werden.

Für das erfindungsgemäße Verfahren können im Arbeitsschritt a) auch Stahlflachprodukte bereitgestellt werden, die durch flexibles oder partielles Walzen über Länge und / oder Breite unterschiedliche Dicken erhalten haben. Ebenso können im Arbeitsschritt a) für das erfindungsgemäße Verfahren aus miteinander verschweißten unterschiedlichen Blechzuschnitten oder desgleichen zusammengesetzte Stahlflachprodukte sowie Stahlbänder, die miteinander verschweißt sind und gemeinsam das zu verarbeitende Stahlflachprodukt bilden, für den erfindungsgemäßen Prozess bereitgestellt werden.

Das jeweils erfindungsgemäß bereitgestellte Stahlflachprodukt besteht aus einem Stahl, der eine für MnB-Stähle typische Zusammensetzung aufweist. Derartige Stähle weisen typischerweise im Anlieferungszustand Streckgrenzen von 250 - 580 MPa und Zugfestigkeiten von 400 - 720 MPa auf.

So besteht ein erfindungsgemäß bereitgestelltes Stahlflachprodukt aus

- 0,05 - 0,5 Gew.-% Kohlenstoff ("C"), wobei der C-Gehalt bevorzugt 0,07 - 0,4 Gew.-% beträgt,

- 0,5 - 3 Gew.-% Mangan ("Mn"), wobei der Mn-Gehalt bevorzugt 0,8 - 2,5 Gew.-%, insbesondere 1,0 - 2,0 Gew.-%, beträgt,

- 0,06 - 1,7 Gew.-% Silizium ("Si"), wobei der Si-Gehalt bevorzugt 0,06 - 1,1 Gew.-%, insbesondere 0,06 - 0,9 Gew.-% beträgt,

- bis zu 0,06 Phosphor ("P"), wobei der P-Gehalt höchstens 0,03 Gew.-% beträgt,

- bis zu 0,01 Gew.-% Schwefel ("S"),

- bis zu 1,0 Gew.-% Aluminium ("Al"), wobei der Al-Gehalt bevorzugt höchstens 0,5 Gew.-%, insbesondere höchstens 0,1 Gew.-% beträgt,

- bis zu 0,15 Gew.-% Titan ("Ti"),

- bis zu 0,6 Gew.-% Niob ("Nb"), wobei der Nb-Gehalt bevorzugt bis zu 0,1 Gew.-% beträgt,

- bis zu 0,01 Gew.-% Bor ("B"), wobei der B-Gehalt bevorzugt bis zu 0,005 Gew. % beträgt,

- bis zu 1,0 Gew.-% Chrom ("Cr"), wobei der Cr-Gehalt bevorzugt bis zu 0,5 Gew.-%, insbesondere bis zu 0,2 Gew.-%, beträgt,

- bis zu 1,0 Gew.-% Molybdän ("Mo"), wobei der Mo-Gehalt bevorzugt bis zu 0,5 Gew.-%, insbesondere bis zu 0,2 Gew.-%, beträgt,

- wobei für den Gehalt %Cr an Cr und den Gehalt %Mo an Mo gilt %Cr + %Mo $\leq$ 1 Gew.-%,

- optional bis zu 0,2 Gew.-%, insbesondere bis zu 0,1 Gew.-%, Calcium ("Ca"),

- optional bis zu 0,1 Gew.-% Vanadium ("Va"),

und als Rest aus Eisen und unvermeidbare Verunreinigungen.

Aufgrund ihres Eigenschaftsprofils, insbesondere ihres Potenzials zur Entwicklung hoher Festigkeiten beim fertig warmgeformten und abgekühlten Bauteil, für die Praxis besonders interessant sind dabei Stahlflachprodukte, die in an sich bekannter Weise aus 0,07 - 0,4 Gew.-% C, 1,0 - 2 Gew.-% Mn, 0,06 - 0,4 Gew.-% Si, bis zu 0,03 Gew.-% P, bis zu 0,01 Gew.-% S, bis zu 0,1 Gew.-% Al, bis zu 0,15 Gew.-% Ti, bis zu 0,6 Gew.-% Nb, bis zu 0,005 Gew.-% B, bis zu 0,5 Gew.-% Cr, bis zu 0,5 Gew.-% Mo, wobei die Summe der Gehalte an Cr und Mo höchstens 0,5 Gew.-% beträgt, Rest Eisen und unvermeidbaren Verunreinigungen bestehen.

Hierunter fallen bereits im Serieneinsatz befindliche Stähle, die aus 0,07 - 0,4 Gew.-% C, 1,0 - 1,5 Gew.-% Mn, 0,3 - 0,4 Gew.-% Si, bis zu 0,03 Gew.-% P, bis zu 0,01 Gew.-% S, bis zu 0,05 Gew.-% Al, bis zu 0,15 Gew.-% Ti, bis zu 0,6 Gew.-% Nb, bis zu 0,005 Gew.-% B, bis zu 0,5 Gew.-% Cr, bis zu 0,5 Gew.-% Mo, wobei die Summe der Gehalte an Cr und Mo höchstens 0,5 Gew.-% beträgt, und als Rest aus Eisen und unvermeidbaren Verunreinigungen bestehen. Derart zusammengesetzte Stähle erreichen nach der Warmformgebung und Abkühlung Zugfestigkeiten von bis zu 2000 MPa.

Wie schon erwähnt, wird durch das in vier unterbrechungsfrei aufeinander folgenden Stufen A, B, C, D absolvierte Glühen (Arbeitsschritt b)) an dem jeweils verarbeiteten Stahlflachprodukt eine Oberfläche erzeugt, die weitestgehend vollständig, d.h. zu mindestens 70 %, insbesondere zu mindestens 80 % oder mindestens 90 %, von reinem Fe belegt ist. Hierzu werden in den Zonen A - D des für das Glühen erfindungsgemäß eingesetzten Durchlaufglühofens jeweils besonders abgestimmte Taupunkt- und Glühtemperaturen eingestellt.

Die im Arbeitsschritt b) in den Zonen A - D durchgeführte Glühung erfolgt jeweils unter eine 0,1 - 15 Vol.-% Wasserstoff enthaltenden Glühatmosphäre, deren Rest jeweils aus Stickstoff und unvermeidbaren Verunreinigungen besteht, wobei die Summe der Verunreinigungen typischerweise höchstens 5 Vol.-%, insbesondere höchstens 4 Vol.-% oder, bevorzugt höchstens 3 Vol.-%, beträgt.

Sämtliche der nachfolgend und in den Ansprüchen zu den Glühtemperaturen $GT_A$, $GT_B$, $GT_C$ und $GT_D$ gemachten Angaben beziehen sich auf die durchschnittliche Ofenraumtemperatur während des Banddurchsatzes.

An der Oberfläche des erfindungsgemäß bereitgestellten Stahlflachprodukts sind vor dem Eintritt in die Zone A des erfindungsgemäß betriebenen Durchlaufofens verschiedenste Oxidprodukte vorhanden, die sich hinsichtlich Qualität der Beschichtung und insbesondere in Bezug auf die Porenbildung in der Beschichtung negativ auswirken. Durch die erfindungsgemäße Durchlaufglühung werden diese Oxide umgewandelt, so dass im technischen Sinne nach der Glühung ausschließlich Fe an der Oberfläche des Stahlflachprodukts vorhanden ist.

Indem in der Zone A des Durchlaufofens die Taupunkttemperatur $TP_A$ auf -10 °C bis -25 °C und die Glühtemperatur $GT_A$ auf 800 - 950 °C eingestellt werden, werden die auf dem Stahlflachprodukt vorhandenen Oxide mit Eisenoxiden überlagert. Um dies besonders zielgerichtet zu erreichen, kann in der Zone A des Durchlaufofens die Glühtemperatur $GT_A$ 810 - 940 °C und die Taupunkttemperatur $TP_A$ -15 - -25 °C betragen.

In den Zonen B und C kommt es zur Reduktion der Eisenoxide, so dass nach der Zone C an der Oberfläche Eisen vorliegt. In der Zone B wird hierzu die Taupunkttemperatur $TP_B$ der dort herrschenden Glühatmosphäre dann auf -27 ° bis -41 °C abgesenkt und die Glühtemperatur $GT_B$ bei 800 - 930 °C gehalten, wobei es sich im Hinblick auf den angestrebten Effekt als besonders betriebssicher herausgestellt hat, wenn bei der im Arbeitsschritt b) absolvierten Glühung in der Zone B des Durchlaufofens die Glühtemperatur $GT_B$ 800 - 900 °C beträgt.

In der Zone C wird die Taupunkttemperatur TPc der dort herrschenden Glühatmosphäre dann auf -30 °C bis -80 °C weiter abgesenkt und die Glühtemperatur GTc bei 800 - 950 °C gehalten, um die Reduktion des Eisenoxides zu Eisen zu vervollständigen. Dieser Effekt kann dann besonders sicher erzielt werden, wenn bei der im Arbeitsschritt b) absolvierten Glühung in der Zone C des Durchlaufofens die Glühtemperatur GTc 800 - 920 °C und die Taupunkttemperatur TPc -30 °C bis -50 °C betragen.

In der Zone D wird die Taupunkttemperatur $TP_D$ der dort herrschenden Glühatmosphäre dann auf -30 C° bis -20 °C erhöht und die Glühtemperatur $GT_D$ bei 750 - 950 °C gehalten, um das Stahlflachprodukt so zu temperieren, dass einerseits seine Rekristallisation ablaufen kann und andererseits die zuvor erzielte Reineisen-Oberfläche erhalten bleibt. Dieser Effekt kann dann besonders sicher erzielt werden, wenn bei der im Arbeitsschritt b) absolvierten Glühung in der Zone D des Durchlaufofens die Glühtemperatur $GT_D$ 780 - 930 °C beträgt.

Der Lambda-Wert λ beschreibt das Verhältnis der in den Durchlaufofen eingebrachten Massen von Luft zu Brennstoff und liegt in der in den Zonen A - D eines erfindungsgemäß eingesetzten Durchlaufofens aufrechterhaltenen Glühatmosphäre bei der im Arbeitsschritt b) des erfindungsgemäßen Verfahrens absolvierten Glühung bei 0,95 - 1,1.

Die Voraussetzung für die erfindungsgemäß erzielten Effekte stellt die Anwesenheit mindestens eines Erdalkali- oder Übergangsmetalls, hier Mg, in der nach der erfindungsgemäßen Glühung (Arbeitsschritt b)) aufgebrachten Korrosionsschutzbeschichtung auf Basis von Aluminium ("Al") dar. So sind im Überzug eines erfindungsgemäß prozessierten Stahlflachprodukts nach dem Auftrag der Korrosionsschutzbeschichtung (Arbeitsschritt c)) und vor der Erwärmung für die Warmumformung (Arbeitsschritt f)) mindestens 0,1 - 5 Gew.-% mindestens eines Erdalkali- oder Übergangsmetalls, hier Mg, und als Rest Al und unvermeidbare Verunreinigungen vorhanden. Dabei haben sich Erdalkali- oder Übergangsmetall-Gehalte, hier Gehalte an Mg, von mindestens 0,11 Gew.-% als besonders günstig im Hinblick auf die Zuverlässigkeit erwiesen, mit der sich die positiven Effekte der Anwesenheit des mindestens einen Erdalkali- oder Übergangsmetalls im erfindungsgemäß applizierten Überzug nutzen lassen. Bei über 5 Gew.-% liegenden Erdalkali- oder Übergangsmetall-Gehalten, hier Mg-Gehalten, würde es im Schmelztiegel zu vermehrter Oxidbildung kommen, die die Oberflächenqualität mindern würden. In der Warmumformung würde sich ebenfalls zu viel Oxid bilden, wodurch zum einem die Wasserspaltung zu Wasserstoff und Sauerstoff befördert und damit einhergehend die Gefahr entstehen würde, dass vermehrt Wasserstoff in den Stahl eintritt. Zum anderen kann die dickere Oxidschicht zu einer höheren Verschmutzung im Umformwerkzeug führen. Um diesen Effekt sicher zu vermeiden, kann der Gehalt der im Arbeitsschritt c) applizierten Korrosionsschutzbeschichtung an Erdalkali- oder Übergangsmetall, hier Mg, auf in Summe höchstens 1,5 Gew.-%, insbesondere höchstens 0,6 Gew.-%, beschränkt werden. Die Erdalkali- oder Übergangsmetall-Gehalte, hier die Mg-Gehalte, der im Arbeitsschritt c) applizierten Korrosionsschutzbeschichtung betragen somit insbesondere 0,11 - 1,5 Gew.-% oder, speziell, 0,11 - 0,6 Gew.-%.

Wie schon erwähnt, hat sich aus der Gruppe der Erdalkali- oder Übergangsmetalle Mg als für die erfindungsgemäßen Zwecke besonders geeignet herausgestellt, das alleine im erfindungsgemäß applizierten Überzug vorhanden ist, um die erfindungsgemäß angestrebten Effekte nutzen zu können.

Zusätzlich ist im Überzug, der im Arbeitsschritt c) appliziert wird, Silizium ("Si") in Gehalten von 3 Gew.-% bis zu 15 Gew.-%, insbesondere bis zu 11 Gew.-%, vorhanden, um die Ausbildung einer Eisenaluminiumschicht zu begünstigen, die auf der im Arbeitsschritt b) eingestellten Eisenoberfläche gut haftet und dabei höchstens ein Drittel der Gesamtschichtdicke des Überzugs einnimmt. Bei zu hohen Si-Gehalten würde sich eine zu große Legierungsschichtdicke ergeben, was wiederum zu Haftungsverlust führen könnte. Dabei erweisen sich Si-Gehalte von mindestens 3 Gew.-%, insbesondere mindestens 8,5 Gew.-%, in dieser Hinsicht als besonders günstig, so dass sich bei einem Si-Gehalt von 3 - 15 Gew.-%, insbesondere 3 - 11 Gew.-%, speziell 8,5 - 11 Gew.-%, in der Praxis die positiven Einflüsse von Si besonders zuverlässig nutzen lassen.

Ebenso zusätzlich ist im im Arbeitsschritt c) applizierten Überzug Fe in Gehalten von 1 Gew.-% bis zu 5 Gew.-%, insbesondere bis zu 4 Gew.-%, speziell bis zu 3,5 Gew.-%, vorhanden. Eisen würde sich im Überzug in dieser Größenordnung einstellen, weil dies der Sättigungswert einer Aluminiumschmelze in dem Temperaturbereich 650 - 720 °C ist. Indem Eisen der Schmelze gezielt zugegeben wird, kann die Gefahr vermindert werden, dass es zur Auflösung von eisenhaltigen Bauteilen des Schmelzentiegels kommt, die mit der Schmelze in Berührung kommen. Dabei erweisen sich Fe-Gehalte von mindestens 1 Gew.-% in dieser Hinsicht als besonders günstig, so dass sich bei einem Fe-Gehalt von 1 - 5 Gew.-%, insbesondere 1 - 4 Gew.-%, speziell 1 - 3,5 Gew.-%, in der Praxis die positiven Einflüsse von Fe besonders zuverlässig nutzen lassen.

Die Korrosionsschutzbeschichtung kann im Arbeitsschritt c) des erfindungsgemäßen Verfahrens in jeder bekannten Weise aufgebracht werden.

Dabei eignet sich insbesondere das so genannte "Feueraluminieren", bei dem das jeweilige Stahlflachprodukt durch ein geeignet erwärmtes, den Maßgaben der Erfindung entsprechend zusammengesetztes Schmelzenbad geleitet wird. Eine solche Schmelztauchbeschichtung ist insbesondere für bandförmige Stahlflachprodukte mit einer Dicke von bis zu 3 mm geeignet. Bei größeren Dicken kann auch eines der eingangs schon erwähnten Dampfabscheideverfahren (PVD, CVD) eingesetzt werden, um die Korrosionsschutzbeschichtung zu applizieren.

Das Auflagengewicht einer erfindungsgemäß im Arbeitsschritt c) applizierten Korrosionsschutzbeschichtung beträgt typischerweise pro Seite 30 - 100 g/m$^2$, insbesondere 40 - 80 g/m$^2$. Das bei beidseitiger Beschichtung vorhandene Auflagengewicht beträgt somit insgesamt 60 - 200 g/m$^2$.

Nach dem Auftragen der Korrosionsschutzbeschichtung (Arbeitsschritt c)) kann das entsprechend beschichtete Stahlflachprodukt optional einem Dressierwalzen unterzogen werden (Arbeitsschritt d)), um die mechanischen Kennwerte des Stahlflachprodukts einzustellen, seine Oberflächenrauheit einzustellen oder zu homogenisieren. Die dazu eingestellten Umformgrade (Umformgrad = (Dicke vor dem Dressierwalzen - Dicke nach dem Dressierwalzen) / (Dicke vor dem Dressierwalzen)) betragen typischerweise 0,1 - 5 %.

Nach dem Auftragen der Korrosionsschutzbeschichtung (Arbeitsschritt c)) oder dem optional durchgeführten Dressierwalzen (Arbeitsschritt d)) wird in an sich bekannter Weise bei Bedarf von dem Stahlflachprodukt eine Platine abgeteilt, deren Abmessungen in bekannter Weise an die Abmessungen des aus ihr warmzuformenden Blechbauteils angepasst sind (Arbeitsschritt e)).

Das Stahlflachprodukt selbst oder die Platine wird dann im Arbeitsschritt f) auf eine Warmformtemperatur erwärmt, die höher ist als die Ac3-Temperatur des Stahls des Stahlflachprodukts und 1000 °C nicht überschreitet, insbesondere mindestens gleich der Ac3-Temperatur + 50 °C ist und höchstens 980 °C beträgt, wobei sich Warmformtemperaturen von 820 - 950 °C als besonders vorteilhaft herausgestellt haben. Bei dieser Temperatur wird das Stahlflachprodukt gehalten, bis eine ausreichende Wärmemenge in das Stahlflachprodukt oder die davon abgeteilte Platine eingebracht ist. Die jeweils konkret benötigte Haltedauer und Glühtemperatur lässt sich anhand der Maßgabe abschätzen, dass die im Arbeitsschritt f) in das Stahlflachprodukt oder die Platine eingebrachte Wärmeenergiemenge Js mehr als 100.000 kJs und höchstens 800.000 kJs betragen soll, wobei sich Js gemäß folgender bekannter Gleichung berechnen lässt:

$$Js\ [kJs] = [(T2-T1)\ x\ c\ x\ t\ x\ m]/1000;$$

mit

T2: Endtemperatur des Bauteils am Ende der Erwärmung in K
T1: Starttemperatur des Bauteils zu Beginn der Erwärmung in K
c: Wärmekapazität Stahl (typischerweise 460 J/kgK)
t: Haltezeit des Stahlflachprodukts oder der Platine auf der Endtemperatur in s
m: Masse des Stahlflachprodukts oder der Platine in kg

Die Erwärmung kann in jeder geeigneten Weise durchgeführt werden. Im Fall, dass hierzu ein konventioneller Durchlaufofen eingesetzt wird, in dem das Stahlflachprodukt oder die Platine durch Strahlungswärme erwärmt wird, beträgt die geeignete Haltedauer typischerweise 100 - 900 s, bevorzugt 180 - 720 s, insbesondere 240 - 600 s. Im Fall, dass eine Warmformtemperatur von 850 - 930 °C gewählt wird, erweisen sich in der Praxis auch Haltedauern von 180 - 600 s, insbesondere 240 - 600 s, in der Regel als ausreichend. Alternativ zum Einsatz eines Durchlaufofens ist es beispielsweise auch möglich, die Erwärmung in einem konventionellen Kammerofen durchzuführen.

Die Erwärmung des Stahlflachprodukts oder der Platine kann auch in an sich ebenfalls bekannter Weise in zwei Stufen erfolgen, um zunächst eine Vorlegierung der Korrosionsschutzbeschichtung zu erzielen und um darauf folgend das Stahlflachprodukt oder die Platine auf die jeweilige Warmformtemperatur zu bringen.

Die auf die Warmformtemperatur erwärmte Platine oder das auf die Warmformtemperatur erwärmte Stahlflachprodukt wird innerhalb einer Transferzeit von typischerweise weniger als 15 Sekunden, insbesondere weniger als 10 Sekunden, in das Warmformwerkzeug eingelegt und dort zu dem Bauteil warmgeformt (Arbeitsschritt g)).

Anschließend oder gleichzeitig erfolgt eine in an sich bekannter Weise durchgeführte gesteuerte Abkühlung mindestens eines Abschnitts des erhaltenen Bauteils, um in dem betreffenden Abschnitt des Bauteils das gewünschte Gefüge zu erzeugen. Die dazu erforderlichen Abkühlgeschwindigkeiten betragen typischerweise 20 - 500 K/s, wobei Abkühlgeschwindigkeiten von mehr als 30 K/s, insbesondere mehr als 50 K/s, besonders praxisgerecht sind. Mit der Abkühlung "mindestens eines Abschnitts" ist dabei selbstverständlich auch die Möglichkeit umfasst, das Bauteil als Ganzes in der genannten Weise abzukühlen, um im gesamten Bauteil Härtegefüge zu erzeugen.

Mit dem erfindungsgemäßen Verfahren gelingt die Erzeugung eines Blechbauteils, das aus einem Stahlflachprodukt hergestellt ist, dessen Stahlsubstrat aus einem Stahl besteht, der (in Gew.-%) aus 0,05 - 0,5 % C, 0,5 - 3 % Mn, 0,06 - 1,7 % Si, bis zu 0,06 % P, bis zu 0,01 % S, bis zu 1,0 % Al, bis zu 0,15 % Ti, bis zu 0,6 % Nb, bis zu 0,01 % B, bis zu 1,0 % Cr, bis zu 1,0 % Mo, wobei die Summe der Gehalte an Cr und Mo höchstens 1,0 % beträgt, bis zu 0,2 % Ca, insbesondere bis zu 0,1 %, bis zu 0,1 % V, und als Rest aus Eisen und unvermeidbaren Verunreinigungen besteht, und welches mit einer Korrosionsschutzbeschichtung beschichtet ist, die aus (in Gew.-%) 3 % bis 15 % Si, 1 % bis 5 % Fe, 0,1 - 5 Gew.-% Mg und als Rest aus Al und unvermeidbaren Verunreinigungen besteht, wobei die an das Stahlsubstrat angrenzende Schicht der Korrosionsschutzbeschichtung eine Interdiffusionsschicht ist, die aus Ferrit mit einem Al-Gehalt von bis zu 50 Gew.%, insbesondere mindestens 1 Gew.-% Al, besteht, wobei in einem Querschliff der Interdiffusionsschicht der Anteil der von Poren besetzten Fläche mit einem Durchmesser $\geq$ 0,1 $\mu$m weniger als 10 %, insbesondere weniger als 5 %, bevorzugt weniger als 3 %, beträgt und wobei auf einer Messlänge von 500 $\mu$m die mit Poren besetzte Fläche in der Interdiffusionsschicht < 300 $\mu$m$^2$, insbesondere weniger als 200 $\mu$m$^2$, besonders bevorzugt weniger als 100 $\mu$m$^2$, ist. Dabei beträgt die Dicke der Legierungsschicht 1 - 30 $\mu$m, bevorzugt 2 - 20 $\mu$m, insbesondere 4 - 16 $\mu$m.

Nachfolgend wird die Erfindung anhand von Ausführungsbeispielen erläutert.

Fig. 1 zeigt einen Querschliff eines Stahlblechs eines erfindungsgemäß durch Warmumformen hergestellten Blechbauteils in 500-facher Vergrößerung. Der Querschliff ist in konventioneller Weise durch Ätzung mit 3 % Nital präpariert worden, um den auf dem Stahlblech vorhandenen Schichtaufbau zu verdeutlichen.

Fig. 2 zeigt eine schematische Darstellung des Querschliffs gemäß Fig. 1.

Demnach umfasst die auf dem Stahlsubstrat S gebildete

Korrosionsschutzbeschichtung K eine unmittelbar an das Stahlsubstrat S angeschlossene Interdiffusionsschicht D, die im Wesentlichen aus alpha-Mischkristall (also Ferrit) mit erhöhtem Al-Gehalt besteht. Phasenweise liegt hier noch Fe2Al5 vor. Die Interdiffusionsschicht D zeichnet sich dabei dadurch aus, dass sie homogen und gleichmäßig ausgebildet ist und dass sie nahezu porenfrei vorliegt.

In Richtung zur freien Oberfläche O der Korrosionsschutzbeschichtung K hat sich auf der Diffusionsschicht D eine erste Si-reiche Schicht $S_1$ gebildet. An der Grenze zwischen der Diffusionsschicht D und der Si-reichen Schicht $S_1$

liegen in der Diffusionsschicht D in geringer Anzahl und in weitem Abstand zueinander Poren P1 vor.

In Richtung der freien Oberfläche O auf der Si-reichen Schicht $S_1$ hat sich eine erste Zwischenschicht $Z_1$ gebildet, die aus Aluminium-Eisen besteht, wobei der Hauptanteil beim Aluminium liegt. Spuren von Si, Erdalkali-und/oder Übergangsmetallen wie auch unvermeidbare Verunreinigungen können ebenso in der Schicht $S_1$ enthalten sein. Die Zwischenschicht Z1 ist porenfrei.

In Richtung der freien Oberfläche O auf der Zwischenschicht $Z_1$ liegt eine zweite Si-reiche Schicht $S_2$.

In Richtung der freien Oberfläche O auf der Si-reichen Schicht $S_2$ ist eine zweite Zwischenschicht $Z_2$ gebildet. Auch die Schicht Z2 besteht aus Aluminium-Eisen, wobei der Hauptanteil beim Aluminium liegt und zusätzlich Erdalkali-und/oder Übergangsmetalle vorhanden sein können. Spuren von Si wie auch unvermeidbare Verunreinigungen können ebenso enthalten sein. Auch die Zwischenschicht Z2 ist porenfrei.

Die zweite Zwischenschicht Z2 ist an ihrer der freien Oberfläche O zugewandten Seite mit einer Oxidschicht OX belegt, die im Wesentlichen aus Aluminium, Silizium und Erdalkali- und/oder Übergangsmetalloxiden besteht. Es können dabei Oxidschichtdicken von bis zu 1,5 $\mu$m im Durchschnitt an einem warmumgeformten Bauteil vorliegen. An der die freie Oberfläche O der Korrosionsschutzbeschichtung K bildenden Oberfläche der Oxidschicht OX haben sich zur Umgebung offene, kraterförmige Poren $P_2$ in geringer Anzahl und großem Abstand zueinander gebildet.

Zum Vergleich ist aus einem Stahlflachprodukt, das nach dem Muster des in der EP 2 086 755 beschriebenen Standes der Technik mit einer AlSi-Beschichtung belegt war, ein Bauteil geformt worden. Dessen Überzug bestand aus (in Gew.-%) 9,5 % Si, 3,5 % Fe und als Rest aus Aluminium und unvermeidbaren Verunreinigungen, war also frei von Erdalkali- oder Übergangsmetallen der erfindungsgemäß zugegebenen Art.

Das Stahlsubstrat des Stahlflachprodukts bestand aus (in Gew.-%) 0,224 % C, 0,25 % Si, 1,16 % Mn, 0,014 % P, 0,002 % S, 0,039 % Al, 0,0034 % N, 0,2 % Cr, 0,03 % Ti und 0,0026 % B.

Vor der Applikation der metallischen Beschichtung und der Umformung zu dem Stahlflachprodukt hat das zum Vergleich verarbeitete Stahlflachprodukt eine Glühbehandlung in einem Durchlaufofen mit vier Zonen durchlaufen, in denen die in Tabelle 6 angegebenen Taupunkttemperaturen TP und Glühtemperaturen GT eingestellt worden sind. Das Luftverhältnis $\lambda$ lag im Durchlaufofen bei 0,98.

Auch bei dem konventionell zum Vergleich erzeugten Bauteil hat sich ein fünfschichtiger Schichtaufbau der Korrosionsschutzbeschichtung eingestellt. Jedoch zeigte sich, dass gegenüber der Porenzahl im Überzug des konventionell zum Vergleich erzeugten Bauteils bei dem erfindungsgemäß erzeugten Bauteil die Anzahl der Poren P2 in der Oxidschicht OX um mindestens 25 % und die Anzahl der Poren P1 in der Diffusionsschicht D um mindestens 40 % gegenüber den Poren verringert worden ist, die in den korrespondierenden Schichten der Korrosionsschutzbeschichtung des konventionell zum Vergleich hergestellten Bauteils vorhanden waren. Die mit Poren P1 besetzte Fläche betrug nach einer Verweilzeit im Ofen von 600 s bei einer Messlänge von 500 $\mu$m in der Schicht D 300 $\mu$m$^2$.

Die Verringerung der Poren in P2 führt zu einer Reduzierung der Lackkrater und verbessert die Klebehaftung sowie Schweißeignung. Die Poren in P2 weisen Öffnungen in Richtung Atmosphäre von einigen nm auf. Wird nun ein Bauteil nach der Warmumformung automobiltypisch weiterverarbeitet, durchläuft es neben einer größeren Zahl von Reinigungsschritten auch immer eine kathodische Tauchlackierung. Dabei kommt es unvermeidbar zu einem Kontakt mit wasserbasierten Lösungen. Während der Reinigung kann Wasser in die Poren P2 der Schicht eindringen, da die dem Reinigungswasser zugegebenen Tenside die Benetzung verbessern und die Oberflächenspannung des Wassers deutlich reduzieren. Auch im Prozess der kathodischen Tauchlackierung kann Wasser in die geöffneten Poren P2 eindringen. In diesem speziellen Fall führt das Reinigungswasser zusätzlich zu einer Separation der Lackpartikel, die aufgrund der Größenordnung der Öffnung nicht in die Poren P2 eindringen können. Wasser, welches dann in den Poren P2 vorliegt, erreicht beim Einbrennen der Lackschichten den Siedepunkt, wodurch es zu Dampfphasen kommt, die in einer Art Siedeverzug explosionsartig durch den Lack an die Umgebung gelangt. Durch diese Reaktion bilden sich sogenannte Lackkrater, die neben einer optischen Beeinflussung auch die Wirkung des Lackes hinsichtlich des Korrosionsschutzes deutlich schmälern. Insbesondere bei aluminiumbasierten Überzügen kann es an solchen Stellen zu Korrosion und zur Lackunterwanderung kommen. Für den Weiterverarbeiter besonders problematisch ist dabei auch der auftretende Rotrost, der aufgrund der hohen Eisengehalte der Beschichtung gebildet wird und optisch deutlich hervortritt.

Auch können bei einer Oberfläche, an denen viele offene Poren P2 vorliegen, Klebstoffe aufgrund ihrer höheren Viskosität nicht in die Poren P2 eindringen. Dadurch kann es zu einer unvollständigen Bedeckung der Oberfläche mit Klebstoff kommen. Auch bilden sich im Bereich der Poren Hohlräume, in deren Folge die Klebhaftung ebenfalls verschlechtert wird.

Die in der Schicht OX vorliegenden Poren P2 führen zudem beim Widerstandpunktschweißen zu veränderten Strombahnen im Material, die die Schweißeignung negativ beeinflussen.

Bei einer hohen Porenzahl liegt zusätzlich eine vergrößerte Oberfläche vor, an welcher sich bei der Oxidation im Warmumformprozess Wasser spalten kann. Auf diese Weise kann diffusibler Wasserstoff in das Material eindringen, wodurch bekanntermaßen das Risiko der wasserstoffinduzierten Rissbildung steigt.

Durch die bei erfindungsgemäßer Herstellung eines Blechbauteils erzielte Minimierung der Häufigkeit, in der die Poren P2 auftreten, lassen sich die mit der Porenbildung bei konventionell erzeugten Bauteilen verbundenen Risiken effektiv mindern.

Auch die Verringerung der Anzahl der Poren P1 in der Diffusionsschicht D führt zu einer Erhöhung der bei Klebverbindungen übertragbaren Kraft und zu einer Verbesserung der Schweißeignung.

Die Poren in P2 stellen Hohlräume innerhalb der Korrosionsschutzbeschichtung K dar. Bei einer zu hohen Anzahl von Poren besteht die Gefahr, dass die Korrosionsschutzbeschichtung K im Grenzbereich zwischen der Diffusionsschicht D und der ersten Si-reichen Schicht S1 aufbricht, so dass auch die Klebenaht frühzeitig versagt. Mit der erfindungsgemäß erzielten Verminderung der Anzahl an Poren P1 ist die Fläche, über die die Kräfte der Klebeverbindung übertragen werden, um über 60 % erhöht und damit das Risiko eines Delaminationsbruchs entsprechend reduziert.

Zum Nachweis der Wirkung der Erfindung sind aus sechs Stählen ST1 - ST6, deren Zusammensetzungen in Tabelle 1 angegeben sind, in konventioneller Weise kaltgewalzte Stahlbleche mit einer Dicke von jeweils 1,5 mm erzeugt worden (Arbeitsschritt a) des erfindungsgemäßen Verfahrens).

Die so bereitgestellten Stahlbleche sind in neun Versuchen V1 - V9 jeweils einer Durchlaufglühung G1, G2 oder G3 in einem Durchlaufofen unterzogen worden, der vier aufeinander folgend durchlaufene Zonen A, B, C, D aufwies. In Tabelle 2 sind die in den Zonen A - D bei den Varianten G1 - G3 der Glühung eingestellten Taupunkttemperaturen $TP_A$ - $TP_D$ ,die Glühtemperaturen $GT_A$ -$GT_D$ sowie der Wasserstoffgehalt H2 und der Stickstoffgehalt N2 der jeweiligen Glühatmosphäre angegeben, deren Rest aus technisch unvermeidbaren Verunreinigungen bestand (Arbeitsschritt b) des erfindungsgemäßen Verfahrens).

Die so geglühten Proben sind jeweils in konventioneller Weise mit jeweils einer Korrosionsschutzbeschichtung Z1 - Z5 auf Al-Basis mit einem Auflagengewicht AG beschichtet worden. Die Zusammensetzungen der Korrosionsschutzbeschichtungen Z1 - Z5 sind in Tabelle 3 angegeben (Arbeitsschritt c) des erfindungsgemäßen Verfahrens).

Die jeweils mit einer der Korrosionsschutzbeschichtungen Z1 - Z5 versehenen Proben sind in den Versuchen V1 - V9 jeweils im Durchlaufofen auf jeweils eine Warmformtemperatur Twu erwärmt worden, bei der sie über eine Haltedauer twu gehalten worden sind (Arbeitsschritt f) des erfindungsgemäßen Verfahrens).

Der Stahl ST1 - ST6, aus dem die bei den Versuchen V1 - V9 jeweils eingesetzten Proben bestanden, die bei den Versuchen V1 - V9 jeweils angewendeten Varianten G1 - G3 der Glühung, die Zusammensetzungen Z1 - Z5 der bei den Versuchen V1 - V9 jeweils erzeugten Korrosionsschutzbeschichtungen und deren jeweilige Auflagengewichte AG sowie die bei den Versuchen V1 - V9 jeweils gewählten Warmformtemperaturen Twu und Haltezeiten twu sind in Tabelle 4 angegeben.

Die so erwärmten Proben sind in einer Transferzeit von jeweils 3 - 7 s aus dem Durchlaufofen entnommen und in ein konventionelles Warmformwerkzeug eingelegt worden, in dem sie zu einem Bauteil warmgeformt worden sind. Anschließend erfolgte eine Abkühlung mit jeweils 270 K/s auf Raumtemperatur (Arbeitsschritte g) und h) des erfindungsgemäßen Verfahrens).

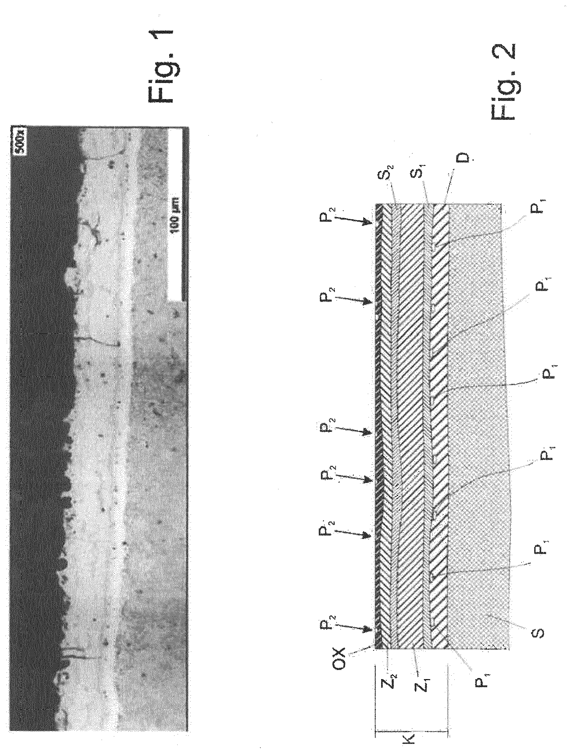

Von den in den Versuchen V1 - V9 erhaltenen Bauteilen sind in an sich bekannter Weise drei Querschliffe erzeugt worden, die zur Verdeutlichung des Schichtaufbaus mit 3 % Nital geätzt worden sind. Von den Querschliffen wurden Abbildungen in 500-facher Vergrößerung erzeugt, wie beispielhaft in Fig. 1 gezeigt. In der jeweiligen Abbildung sind über einen Abschnitt mit einer Länge von 550 μm die in den Schichten OX und D vorhandenen Poren P1, P2 gezählt worden. Aus den für die jeweils drei Querschliffe einer Probe ermittelten Zählergebnissen ist das arithmetische Mittel gebildet worden. Dieses arithmetische Mittel der für die Poren P1 und P2 ermittelten Zahlen ist mit den in gleicher Weise für eine Vergleichsprobe ermittelten Vergleichswerten verglichen worden.

Die sich aus diesem Vergleich ergebende, durch die Erfindung erzielte relative Reduzierung der Porenzahlen P1 und P2 ist in Tabelle 5 angegeben. Ebenso sind in Tabelle 5 der Anteil der Lackkrater an der Gesamtfläche der jeweiligen Probe, der Rückgang der Delaminationsfläche sowie der gemäß StahlEisen-Prüfblatt SEP 1220-2 ermittelte Schweißbereich genannt. Schweißbereiche größer 1 kA sind als "in Ordnung" eingestuft worden.

Tabelle 1

| Stahl | C | Si | Mn | P | S | Al | Nb | Ti | B |
|---|---|---|---|---|---|---|---|---|---|
| A | 0,08 | 0,33 | 0,95 | 0,025 | 0,02 | 0,013 | 0,09 | 0,01 | 0,005 |
| B | 0,23 | 0,38 | 1,3 | 0,02 | 0,007 | 0,013 | - | 0,03 | 0,004 |
| C | 0,38 | 0,37 | 1,38 | 0,02 | 0,008 | 0,013 | - | 0,1 | 0,005 |
| D | 0,2 | 0,35 | 1,35 | 0,02 | 0,008 | 0,012 | - | 0,02 | 0,004 |
| E | 0,14 | 0,25 | 1,07 | 0,1 | 0,001 | 0,08 | 0,025 | 0,01 | 0,002 |
| F | 0,24 | 0,3 | 1,3 | 0,022 | 0,008 | 0,012 | - | 0,02 | 0,004 |
| Angaben in Gew.-%, Rest Fe und unvermeidbare Verunreinigungen | | | | | | | | | |

Tabelle 2

| Glühung | Lambda-Wert | Taupunkttemperatur TP | | | | Glühtemperatur GT | | | | Glühatmosphäre GA | |
|---|---|---|---|---|---|---|---|---|---|---|---|
| | | [°C] | | | | [°C] | | | | [Vol.-%] | |
| | | A | B | C | D | A | B | C | D | H2 | N2 |
| G1 | 1,05 | -25 | -40 | -40 | -20 | 880 | 880 | 850 | 800 | 7 | 91 |
| G2 | 1,1 | -20 | -40 | -45 | -25 | 890 | 890 | 830 | 800 | 10 | 87 |
| G3 | 0,95 | -12 | -30 | -47 | -22 | 890 | 900 | 900 | 820 | 5 | 92 |

Tabelle 3

| Korrosionsschutzbeschichtung | Mg | Si | Fe |
|---|---|---|---|
| Z1 | 0,3 | 9,5 | 3 |
| Z2 | 0,5 | 8 | 3,5 |
| Z3 | 0,1 | 10 | 3 |
| Z4 | 2 | 8 | 2 |
| Z5 | 0,8 | 8 | 3 |
| Angaben in Gew.-%, Rest Al und unvermeidbare Verunreinigungen | | | |

Tabelle 4

| Versuch | Stahl | Glühung | Korrosionsschutzbeschichtung | AG | Twu | $t_{WU}$ |
|---|---|---|---|---|---|---|
| | | | | [g/m²] | [°C] | [s] |
| V1 | A | G1 | Z3 | 69 | 920 | 300 |
| V2 | B | G2 | Z2 | 70 | 920 | 180 |
| V3 | C | G1 | Z3 | 75 | 925 | 360 |
| V4 | D | G3 | Z5 | 65 | 920 | 420 |
| V5 | E | G1 | Z1 | 70 | 900 | 300 |
| V6 | F | G3 | Z4 | 71 | 920 | 360 |
| V7 | H | G2 | Z1 | 65 | 925 | 360 |
| V8 | B | G1 | Z3 | 72 | 920 | 300 |
| V9 | D | G3 | Z2 | 71 | 925 | 300 |

Tabelle 5

| Versuch | Verminderung der Poren P1 | Verminderung der Poren P2 | Lackkrater | Rückgang der Delaminationsbruchfläche | Schweißbereich |
|---|---|---|---|---|---|
| | [%] | | | | [kA] |
| V1 | 25 | 50 | 8,4 | 67 | 1,1 |
| V2 | 30 | 75 | 10,5 | 70 | 1 |
| V3 | 28 | 43 | 9,5 | 62 | 1,2 |
| V4 | 35 | 52 | 10,9 | 60 | 1,1 |

(fortgesetzt)

| Versuch | Verminderung der Poren P1 | Verminderung der Poren P2 | Lackkrater | Rückgang der Delaminationsbruchfläche | Schweißbereich |
|---------|---------------------------|---------------------------|------------|----------------------------------------|----------------|
| | [%] | | | | [kA] |
| V5 | 33 | 60 | 11,6 | 65 | 1,2 |
| V6 | 25 | 58 | 7,8 | 63 | 1 |
| V7 | 37 | 57 | 12,5 | 60 | 1,1 |
| V8 | 33 | 70 | 11,6 | 70 | 1 |
| V9 | 28 | 65 | 9,5 | 69 | 1,2 |

Tabelle 6

| Zone | $T_P$ | $T_G$ |
|------|-------|-------|
| | [°C] | [°C] |
| A | -30 | 750 |
| B | -23 | 780 |
| C | -25 | 780 |
| D | -35 | 740 |

**Patentansprüche**

1. Verfahren zum Herstellen eines Blechbauteils aus einem Stahlflachprodukt, das mit einer Korrosionsschutzbeschichtung versehen ist, umfassend folgende Arbeitsschritte:

a) Bereitstellen eines Stahlflachprodukts, das aus einem Stahl erzeugt ist, der (in Gew.-%) aus 0,05 - 0,5 % C, 0,5 - 3 % Mn, 0,06 - 1,7 % Si, bis zu 0,06 % P, bis zu 0,01 % S, bis zu 1,0 % Al, bis zu 0,15 % Ti, bis zu 0,6 % Nb, bis zu 0,01 % B, bis zu 1,0 % Cr, bis zu 1,0 % Mo, wobei die Summe der Gehalte an Cr und Mo höchstens 1,0 % beträgt, bis zu 0,2 % Ca, bis zu 0,1 % V, und als Rest aus Eisen und unvermeidbaren Verunreinigungen besteht;

b) Glühen des Stahlflachprodukts in einem Durchlaufofen, der vier Zonen A, B, C, D aufweist, die aufeinander folgend von dem Stahlflachprodukt durchlaufen werden und in denen das Stahlflachprodukt unter einer jeweils aus 0,1 - 15 Vol.-% Wasserstoff und als Rest aus Stickstoff sowie technisch unvermeidbaren Verunreinigungen bestehenden Glühatmosphäre mit einer Taupunkttemperatur $TP_A$, $TP_B$, TPc, $TP_D$ bei einer Glühtemperatur $GT_A$, $GT_B$, GTc, $GT_D$ geglüht wird, die folgender Maßgabe genügen:

| Zone | Taupunkttemperatur TP | Glühtemperatur GT |
|------|----------------------|-------------------|
| A | $-10\ °C \leq TP_A \leq -25\ °C$ | $800\ °C \leq GT_A \leq 950\ °C$ |
| B | $-27\ °C \leq TP_B \leq -41\ °C$ | $800\ °C \leq GT_B \leq 930\ °C$ |
| C | $-30\ °C \leq TPc \leq -80\ °C$ | $800\ °C \leq GT_C \leq 950\ °C$ |
| D | $-30\ °C \leq TP_D \leq -20\ °C$ | $750\ °C \leq GT_D \leq 950\ °C$ |

wobei der Lambda-Wert $\lambda$ der in den Zonen A - D aufrechterhaltenen Glühatmosphäre 0,95 - 1,1 beträgt.
c) Applikation einer Korrosionsschutzbeschichtung auf das im Arbeitsschritt b) erhaltene Stahlflachprodukt, wobei die Korrosionsschutzbeschichtung aus (in Gew.-%) 3 % bis 15 % Si, 1 % bis 5 % Fe, 0,1 - 5 % Mg und als Rest aus Al und unvermeidbaren Verunreinigungen besteht;
d) optional: Dressierwalzen des mit der Korrosionsschutzbeschichtung versehenen Stahlflachprodukts;
e) optional: Abteilen einer Platine von dem Stahlflachprodukt;

f) Erwärmen des Stahlflachprodukts oder der Platine auf eine Warmformtemperatur, die höher ist als die Ac3-Temperatur des Stahls des Stahlflachprodukts und 1000 °C nicht überschreitet, über eine Haltedauer, die ausreicht, um in das Stahlflachprodukt oder die Platine eine Wärmeenergiemenge Js von mehr als 100.000 kJs und höchstens 800.000 kJs einzubringen, wobei Js gemäß folgender Gleichung berechnet wird:

$$Js \ [kJs] = [(T2-T1) \times c \times t \times m]/1000;$$

mit

T2: Endtemperatur des Bauteils am Ende der Erwärmung in K
T1: Starttemperatur des Bauteils zu Beginn der Erwärmung in K
c: Wärmekapazität Stahl (typischerweise 460 J/kgK)
t: Haltezeit des Stahlflachprodukts oder der Platine auf der Endtemperatur in s
m: Masse des Stahlflachprodukts oder der Platine in kg

g) Warmformen des auf die Warmformtemperatur erwärmten Stahlflachprodukts oder der auf die Warmformtemperatur erwärmten Platine zu dem Blechbauteil;
h) Abkühlen mindestens eines Abschnitts des Bauteils mit einer Abkühlgeschwindigkeit, die ausreicht, um in dem Abschnitt des Blechbauteils Härtegefüge zu erzeugen.

2. Verfahren nach Anspruch 1, **dadurch gekennzeichnet, dass** die Dicke des im Arbeitsschritt a) bereitgestellten Stahlflachprodukts 0,6 - 7 mm beträgt.

3. Verfahren nach einem der voranstehenden Ansprüche, **dadurch gekennzeichnet, dass** bei der im Arbeitsschritt b) absolvierten Glühung in der Zone A des Durchlaufofens die Glühtemperatur $GT_A$ 810 - 940°C und die Taupunkttemperatur $TP_A$ -15 °C bis -25 °C betragen.

4. Verfahren nach einem der voranstehenden Ansprüche, **dadurch gekennzeichnet, dass** bei der im Arbeitsschritt b) absolvierten Glühung in der Zone B des Durchlaufofens die Glühtemperatur $GT_B$ 800 - 900 °C beträgt.

5. Verfahren nach einem der voranstehenden Ansprüche, **dadurch gekennzeichnet, dass** bei der im Arbeitsschritt b) absolvierten Glühung in der Zone C des Durchlaufofens die Glühtemperatur GTc 800 - 920 °C und die Taupunkttemperatur TPc -30 °C bis -50 °C betragen.

6. Verfahren nach einem der voranstehenden Ansprüche, **dadurch gekennzeichnet, dass** bei der im Arbeitsschritt b) absolvierten Glühung in der Zone D des Durchlaufofens die Glühtemperatur $GT_D$ 780 - 930 °C beträgt.

7. Verfahren nach einem der voranstehenden Ansprüche, **dadurch gekennzeichnet, dass** die im Arbeitsschritt c) auf das Stahlflachprodukt aufgetragene Korrosionsschutzbeschichtung mindestens 0,11 Gew.-% an Mg enthält.

8. Verfahren nach einem der voranstehenden Ansprüche, **dadurch gekennzeichnet, dass** der Gehalt der im Arbeitsschritt c) auf das Stahlflachprodukt aufgetragenen Korrosionsschutzbeschichtung an Mg höchstens 0,6 Gew.-% beträgt.

9. Verfahren nach einem der voranstehenden Ansprüche, **dadurch gekennzeichnet, dass** das Auflagengewicht der im Arbeitsschritt c) auf das Stahlflachprodukt aufgetragenen Korrosionsschutzbeschichtung 30 - 100 g/m² pro beschichteter Seite des Stahlflachprodukts beträgt.

10. Verfahren nach einem der voranstehenden Ansprüche, **dadurch gekennzeichnet, dass** im Arbeitsschritt c) die Applikation der Korrosionsschutzbeschichtung durch Schmelztauchbeschichten erfolgt.

11. Verfahren nach einem der voranstehenden Ansprüche, **dadurch gekennzeichnet, dass** die Erwärmung des Stahlflachprodukts oder der Platine im Arbeitsschritt f) in einem Durchlaufofen durch Strahlungswärme erfolgt und die Haltedauer 100 - 900 s beträgt.

**Claims**

1. Method for manufacturing a sheet metal component from a flat steel product provided with a corrosion protection coating, comprising the following work steps:

   a) providing a flat steel product which is produced from a steel which (in wt.%) consists of 0.05 - 0.5% C, 0.5 - 3% Mn, 0.06 - 1.7% Si, up to 0.06% P, up to 0.01% S, up to 1.0% Al, up to 0.15% Ti, up to 0.6% Nb, up to 0.01 % B, up to 1.0% Cr, up to 1.0% Mo, wherein the total of the contents of Cr and Mo is at most 1.0%, up to 0.2% Ca, up to 0.1% V, and as the remainder of iron and unavoidable impurities;

   b) annealing the flat steel product in a continuous furnace having four zones A, B, C, D, which are passed through successively by the flat steel product and in which the flat steel product is annealed under an annealing atmosphere consisting in each case of 0.1-15 vol.% hydrogen and as the remainder of nitrogen as well as technically unavoidable impurities with a dew point temperature $TP_A$, $TP_B$, $TP_C$, $TP_D$ at an annealing temperature $GT_A$, $GT_B$, $GT_C$, $GT_D$, the following specifications apply:

| Zone | Dew point temperature TP | Annealing temperature GT |
|------|--------------------------|--------------------------|
| A | $-10°C \leq TP_A \leq -25°C$ | $800°C \leq GT_A \leq 950°C$ |
| B | $-27°C \leq TP_B \leq -41°C$ | $800°C \leq GT_B \leq 930°C$ |
| C | $-30°C \leq TP_C \leq -80°C$ | $800°C \leq GT_C \leq 950°C$ |
| D | $-30°C \leq TP_D \leq -20°C$ | $750°C \leq GT_D \leq 950°C$ |

   where the lambda value $\lambda$ of the glowing atmosphere maintained in zones A - D is 0.95 - 1.1.

   c) applying a corrosion protection coating to the flat steel product obtained in work step b), wherein the corrosion protection coating consists of (in wt.%) 3 % to 15 % Si, 1 % to 5 % Fe, 0.1 - 5 % Mg and the balance Al and unavoidable impurities;

   d) optionally: dress rolling the flat steel product provided with the corrosion protection coating;

   e) optionally: separating a board from the flat steel product;

   f) heating the flat steel product or the board to a hot forming temperature which is higher than the Ac3 temperature of the steel of the flat steel product and does not exceed 1000°C for a holding time sufficient to introduce a heat energy quantity Js of more than 100,000 kJs and at most 800,000 kJs into the flat steel product or the board; where Js is calculated according to the following equation:

$$Js \, [kJs] = [(T2-T1) \times c \times t \times m]/1000;$$

   where

   T2: final temperature of the component at the end of heating in K
   T1: starting temperature of the component at the beginning of heating in K
   c: Heat capacity of steel (typically 460 J/kgK)
   t: Holding time of the steel flat product or blank at the final temperature in s
   m: mass of the steel flat product or the blank in kg

   g) hot forming the flat steel product heated to the hot forming temperature or the board heated to the hot forming temperature into the sheet metal component;

   h) cooling at least one section of the component at a cooling rate sufficient to generate a hardening structure in the section of the sheet metal component.

2. Method according to Claim 1, **characterised in that** the thickness of the flat steel product provided in work step a) is 0.6 - 7 mm.

3. Method according to any one of the preceding claims, **characterised in that** the annealing temperature $GT_A$ is 810 - 940°C and the dew point temperature $TP_A$ is -15°C to -25°C in the zone A of the continuous furnace in the case of the annealing completed in work step b).

4. Method according to any one of the preceding claims, **characterised in that** the annealing temperature $GT_B$ is 800 - 900°C in the zone B of the continuous furnace in the case of the annealing completed in work step b).

5. Method according to any one of the preceding claims, **characterised in that** the annealing temperature GTc is 800 - 920°C and the dew point temperature $TP_C$ is -30°C to -50°C in the zone C of the continuous furnace in the case of the annealing completed in work step b).

6. Method according to any one of the preceding claims, **characterised in that** the annealing temperature $GT_D$ is 780 - 930°C in the zone D of the continuous furnace in the case of the annealing completed in work step.b).

7. Method according to any one of the preceding claims, **characterised in that** the corrosion protection coating applied to the flat steel product in work step c) contains at least 0.11 wt.% of Mg.

8. Method according to any one of the preceding claims, **characterised in that** the Mg content of the corrosion protection coating applied to the flat steel product in work step c) is l at most 0.6 wt.%.

9. Method according to any one of the preceding claims, **characterised in that** the load of the corrosion protection coating applied to the flat steel product in work step c) is 30 - 100 g/m$^2$ per coated side of the flat steel product.

10. Method according to any one of the preceding claims, **characterised in that** the application of the corrosion protection coating in work step c) takes place by hot-dip coating.

11. Method according to any one of the preceding claims, **characterised in that** the heating of the flat steel product or the board in work step f) takes place in a continuous furnace by radiant heat and the holding time is 100 - 900 s.

**Revendications**

1. Procédé de production d'une pièce en tôle à partir d'un produit plat en acier pourvu d'un revêtement de protection contre la corrosion, comprenant les étapes suivantes :

a) fourniture d'un produit plat en acier qui est fabriqué à partir d'un acier qui est composé (en % en poids) de 0,05 à 0,5 % de C, 0,5 à 3 % de Mn, 0,06 à 1,7 % de Si, jusqu'à 0,06 % de P, jusqu'à 0,01 % de S, jusqu'à 1,0 % d'Al, jusqu'à 0,15 % de Ti, jusqu'à 0,6 % de Nb, jusqu'à 0,01 % de B, jusqu'à 1,0 % de Cr, jusqu'à 1,0 % de Mo, dans lequel la somme des teneurs en Cr et Mo est de 1,0 % au plus, jusqu'à 0,2 % de Ca, jusqu'à 0,1 % de V, et le reste est du fer et des impuretés inévitables ;
b) recuit du produit plat en acier dans un four continu qui comporte quatre zones A, B, C, D, à travers lesquelles le produit plat en acier passe successivement et dans lesquelles le produit plat en acier est recuit dans une atmosphère de recuit, composée respectivement de 0,1 à 15 % en volume d'hydrogène et le reste étant de l'azote ainsi que des impuretés techniquement inévitables, avec un point de rosée $TP_A$, $TP_B$, $TP_C$, $TP_D$ à une température de recuit $GT_A$, $GT_B$, $GT_C$, $GT_D$, qui répondent à l'exigence suivante :

| Zone | Point de rosée TP | Température de recuit GT |
|---|---|---|
| A | -10 °C ≤ $TP_A$ □ -25 °C | 800 °C ≤ $GT_A$ ≤ 950 °C |
| B | -27 °C ≤ $TP_B$ ≤ -41 °C | 800 °C ≤ $GT_B$ ≤ 930 °C |
| C | -30 °C ≤ $TP_C$ □ -80 °C | 800 °C ≤ $GT_C$ □ 950 °C |
| D | -30 °C ≤ $TP_D$ □ -20 °C | 750 °C ≤ $GT_D$ ≤ 950 °C |

dans lequel la valeur lambda λ de l'atmosphère de recuit maintenue dans les zones A à D est de 0,95 à 1,1.
c) application d'un revêtement de protection contre la corrosion sur le produit plat en acier obtenu à l'étape b), dans lequel le revêtement de protection contre la corrosion est composé de (en % en poids) 3 % à 15 % de Si, 1 % à 5 % de Fe, 0,1 à 5 % de Mg et le reste étant de l'Al et des impuretés inévitables ;
d) éventuellement : laminage de dressage du produit plat en acier pourvu du revêtement de protection contre la corrosion ;
e) éventuellement : séparation d'une plaque du produit plat en acier ;

f) chauffage du produit plat en acier ou de la plaque en acier à une température de thermoformage supérieure à la température Ac3 de l'acier du produit plat en acier et ne dépassant pas 1 000 °C pendant un temps de maintien suffisant pour confau plusérer au produit plat en acier ou à la plaque en acier une quantité d'énergie thermique Js supérieure à 100 000 kJs et de 800 000 kJs , où Js est calculé selon l'équation suivante :

$$Js\ [kJs] = [(T2-T1) \times c \times t \times m]/1\ 000\ ;$$

avec

T2 : Température finale de la pièce en fin de chauffe en K
T1 : Température initiale de la pièce en début de chauffe en K
c : Capacité thermique de l'acier (typiquement 460 J/kgK)
t : Temps de maintien du produit plat en acier ou de la plaque en acier à la température finale en s
m : Masse du produit plat en acier ou de la plaque en kg

g) thermoformage du produit plat en acier chauffé à la température de thermoformage ou de la plaque chauffée à la température de thermoformage pour former la pièce en tôle ;
h) refroidir au moins une partie de la pièce à une vitesse de refroidissement suffisante pour produire une structure durcie dans la partie de la pièce en tôle.

2. Procédé selon la revendication 1, **caractérisé en ce que** l'épaisseur du produit plat en acier fourni à l'étape a) est de 0,6 à 7 mm.

3. Procédé selon l'une des revendications précédentes, **caractérisé en ce que** lors du recuit obtenu à l'étape b) dans la zone A du four continu, la température de recuit $GT_A$ est de 810 à 940 °C et le point de rosée $TP_A$ est de -15 °C à -25 °C.

4. Procédé selon l'une des revendications précédentes, **caractérisé en ce que** lors du recuit obtenu à l'étape b) dans la zone B du four continu, la température de recuit $GT_B$ est de 800 à 900 °C.

5. Procédé selon l'une des revendications précédentes, **caractérisé en ce que** lors du recuit obtenu à l'étape b) dans la zone C du four continu, la température de recuit $GT_C$ est de 800 à 920 °C et le point de rosée $TP_C$ est de -30 °C à -50 °C.

6. Procédé selon l'une des revendications précédentes, **caractérisé en ce que** lors du recuit obtenu à l'étape b) dans la zone D du four continu, la température de recuit $GT_D$ est de 780 à 930 °C.

7. Procédé selon l'une des revendications précédentes, **caractérisé en ce qu'**à l'étape c) le revêtement de protection contre la corrosion appliqué sur le produit plat en acier contient au moins 0,11 % en poids de Mg.

8. Procédé selon l'une des revendications précédentes, **caractérisé en ce qu'**à l'étape c) la teneur en Mg du revêtement de protection contre la corrosion appliqué sur le produit plat en acier est de 0,6 % en poids au plus.

9. Procédé selon l'une des revendications précédentes, **caractérisé en ce qu'**à l'étape c) la masse de revêtement du revêtement de protection contre la corrosion appliqué sur le produit plat en acier est de 30 à 100 g/m$^2$ par face revêtue du produit plat en acier.

10. Procédé selon l'une des revendications précédentes, **caractérisé en ce qu'**à l'étape c) le revêtement de protection contre la corrosion est appliqué par revêtement au trempé.

11. Procédé selon l'une des revendications précédentes, **caractérisé en ce qu'**à l'étape f) le produit plat en acier ou la plaque est chauffé(e) dans un four continu par chaleur rayonnante et le temps de maintien est de 100 à 900 s.

Fig. 1

Fig. 2

EP 3 877 555 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2993248 A1
- DE 102017210201 A1
- DE 102014109943 B3
- US 20130206284 A1
- EP 2086755 B1
- EP 2086755 A